# EUROPEAN PATENT APPLICATION

(11) **EP 4 815 542 A1**
(43) Date of publication of application: **30.09.2026**
(21) Application number: 24900755.0
(22) Date of filing: 17.05.2024
(51) Int. Cl.: H04W 24/02, H04W 28/16, G06N 3/08

(54) **METHOD FOR DETERMINING POLICY FOR SON AND ELECTRONIC DEVICE USING SAME**

(30) Priority: 08.12.2023 KR 20230178055
(71) Applicant: Samsung Electronics Co., Ltd., Suwon-si, Gyeonggi-do 16677 (KR)
(72) Inventor: KIM, Nakyoung, Suwon-si, Gyeonggi-do 16677 (KR); LEE, Sanghyun, Suwon-si, Gyeonggi-do 16677 (KR); SONG, Juhwan, Suwon-si, Gyeonggi-do 16677 (KR)
(74) Representative: Appleyard Lees IP LLP
(86) International application number: PCT/KR2024/006736
(87) International publication number: WO 2025/121565

(57) **Abstract**

A method for determining a policy for a SON is provided. The method may comprise the steps of: receiving PM data of a communication network; generating feature data representing the PM data by using a deep learning-based encoder; determining an outlier score of the feature data by using a deep learning-based outlier detection model; and selecting one of an artificial intelligence (AI)-based policy and a non-AI-based policy for performing SON in the communication network according to the outlier score.

## Description

### Technical Field

The present disclosure relates to a base station and an electronic device for managing the base station. More specifically, the present disclosure relates to a method of determining a policy for performing a Self-Organizing Network (SON).

### Background Art

With the introduction of 5G communication networks (5th Generation Mobile Networks), communication networks have become overcrowded, and thus operational complexity and Operational Expense (OPEX) are considerably increasing. Accordingly, it is necessary to introduce advanced SON functions to address this problem. SONs are mainly used for automatic configuration and optimization of an access network, and may be used in various aspects such as improvement of call quality, load distribution, and reduction of power consumption.

For effective communication network operation, it is necessary to perform SON functions based on Artificial Intelligence (AI). However, there is a risk that AI makes an inaccurate judgment due to outlier data generated in a complex and rapidly changing communication network environment, which may deteriorate communication network performance.

### Disclosure of Invention

### Solution to Problem

According to an aspect of the present disclosure, a method of determining a policy for a SON may be provided. The method may include receiving PM data of a communication network. The method may include generating feature data indicating the PM data by using a deep learning-based encoder. The method may include determining an outlier score of the feature data by using a deep learning-based outlier detection model. The method may include selecting one of an artificial intelligence-based policy or a non-artificial intelligence (non-AI)-based policy for performing the SON in the communication network according to the outlier score.

According to an aspect of the present disclosure, an electronic device for determining a policy for a SON may be provided. The electronic device may include memory storing one or more instructions and one or more processors executing the one or more instructions stored in the memory. The one or more processors may be configured to, by executing the one or more instructions, receive PM data of a communication network. The one or more processors may be configured to, by executing the one or more instructions, generate feature data indicating the PM data by using a deep learning-based encoder. The one or more processors may be configured to, by executing the one or more instructions, determine an outlier score of the feature data by using a deep learning-based outlier detection model. The one or more processors may be configured to, by executing the one or more instructions, select one of an artificial intelligence-based policy or a non-artificial intelligence-based policy for performing the SON in the communication network according to the outlier score.

According to an aspect of the present disclosure, a computer-readable storage medium storing a program for executing any one of the methods described above and methods to be described below, the methods being performed by an electronic device for determining a policy for a SON may be provided.

### Brief Description of Drawings

FIG. 1 is a diagram illustrating a base station and an electronic device, according to an embodiment.
FIG. 2 is a diagram illustrating operations of a base station and an electronic device, according to an embodiment.
FIG. 3 is a diagram illustrating operations of an AI server, an outlier detection module, and a policy switch module, according to an embodiment.
FIG. 4 is a diagram illustrating feature data of a feature space, according to an embodiment.
FIG. 5 is a diagram illustrating an encoder according to an embodiment.
FIG. 6 is a diagram illustrating an operation of generating outlier learning data and inlier learning data, according to an embodiment.
FIG. 7 is a diagram illustrating training of an outlier detection model according to an embodiment.
FIG. 8 is a diagram illustrating an operation of determining an outlier score, according to an embodiment.
FIG. 9 is a flowchart of a method of determining a policy for a SON, according to an embodiment.
FIGS. 10 and 11 are flowcharts of methods of performing a SON, according to embodiments.
FIG. 12 is a flowchart of a method of updating an outlier detection model and an AI-based SON model, according to an embodiment.
FIGS. 13A and 13B are block diagrams of an electronic device according to embodiments.

### Mode for the Invention

Terms used in the present specification will be briefly described, and the present disclosure will be described in detail. In the present disclosure, the expression "at least one of a, b, or c" may refer to "a", "b", "c", "a and b", "a and c", "b and c", "all of a, b, and c", or variations thereof.

The terms used in the present disclosure have been selected as currently widely used general terms as possible while considering the functions in the present disclosure, but these may vary depending on the intention of those skilled in the art, precedents, the emergence of new technologies, and the like. In addition, in certain cases, there are terms arbitrarily selected by the applicant, and in this case, the meaning will be described in detail in the corresponding description. Therefore, the terms used in the present disclosure should be defined based on the meaning of the terms and the overall details of the present disclosure, rather than simply the names of the terms.

A singular expression may include a plural expression unless the context clearly indicates otherwise. The terms used herein, including technical or scientific terms, may have the same meanings as those generally understood by those skilled in the art. In addition, terms including ordinal numbers such as "first" or "second" used herein may be used to describe various components, but the components should not be limited by the terms. The terms are used only for the purpose of distinguishing one component from another component.

Throughout the specification, when a part "includes" a certain component, this means that other components may be further included, rather than excluding other components, unless otherwise stated. In the present disclosure, the terms "unit", "module" etc., mean a unit that processes at least one function or operation, which may be implemented by hardware or software, or by a combination of hardware and software.

In the present disclosure, an "outlier" may indicate data that is outside a range of observed data. For example, when the performance data and configuration parameters of a communication network of a base station deviate from the observed range, this may correspond to an outlier. For example, when the state of the communication network, such as call quality, load, or power consumption, changes rapidly, an outlier may occur in performance data and configuration parameters of the communication network. For example, when the number of user equipment (UE) in the communication network rapidly increases, an outlier may occur in performance data and configuration parameters of the communication network.

In the present disclosure, an "inlier" may indicate data belonging to a range of observed data. For example, when the performance data and configuration parameters of the communication network of the base station fall within the observed range, this may correspond to an inlier.

In the present disclosure, an "outlier score" may be a numerical index indicating a degree or probability that data is an outlier.

In the present disclosure, an "outlier detection technique" may indicate a specific algorithm, method, or approach method for outlier detection (or anomality detection). For example, the outlier detection technique may include at least one of local outlier factor (LOF), isolation forests, extended isolation forest (EIF), k-nearest neighbors (k-NN), Z-score, Robust Covariance, One-Class Support Vector Machine (SVM), or autoencoder reconstruction, but is not limited thereto.

In the present disclosure, "outlier learning data" may refer to learning data labeled as an outlier among learning data.

In the present disclosure, the term "inlier learning data" may refer to learning data labeled as an inlier among learning data.

In the present disclosure, "Performance Management (PM) data" may refer to data indicating the performance of a communication network of a base station. For example, PM data may include at least one of Channel Quality Indicator (CQI) histogram, Signal to Noise Ratio (SINR) histogram, Rank Indicator (RI) histogram, Modulation Coding Scheme (MCS) histogram, or Block Error Rate (BLER) histogram, but is not limited thereto.

In the present disclosure, "Configuration Management (CM) data" may refer to data indicating configuration parameters of a base station related to a communication network. For example, CM data may include at least one of an evolved NodeB (eNB) data retransmission time, an eNB response timeout time, a UE data retransmission time, a UE response timeout time, or a Transmission Time Interval (TTI) bundling of Transport Block Set (TBS), but is not limited thereto.

In the present disclosure, "Key Performance Indicator (KPI)" may refer to data that is an important indicator for performance evaluation and service management of a communication network. For example, a KPI may include at least one of a radio resource control (RRC) connection drop rate, a downlink (DL) Internet protocol (IP) throughput, an uplink (UL) Internet protocol (IP) throughput, or a voice over LTE (VoLTE) quality defect rate, but is not limited thereto.

Hereinafter, embodiments of the present disclosure will be described in detail with reference to the accompanying drawings so that those skilled in the art may easily carry out the present disclosure. However, the present disclosure may be implemented in various different forms and is not limited to the embodiments described herein.

Hereinafter, the present disclosure will be described in detail with reference to the accompanying drawings.

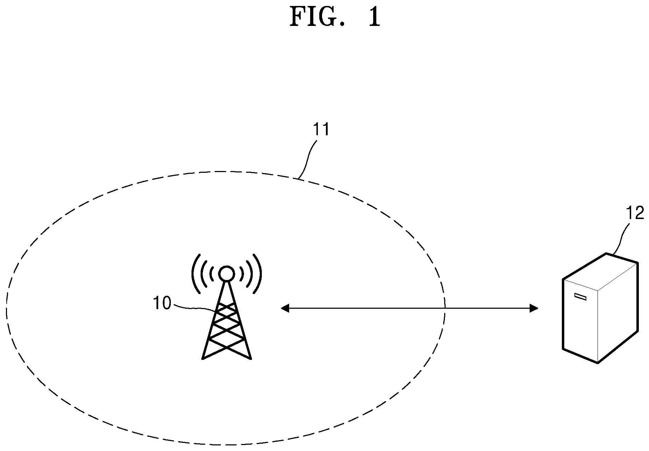

FIG. 1 is a diagram illustrating a base station 10 and an electronic device 12 according to an embodiment.

In an embodiment, the base station 10 may be a wireless station for communication and relay with a terminal (UE) such as a mobile phone. For example, the base station 10 may provide an access network to a user. For example, the base station 10 may be an eNB, which is a base station used in a Long-Term Evolution (LTE) network, or a Next Generation NodeB (gNB), which is a base station used in a 5G network, but is not limited thereto.

The base station 10 may be configured to perform SON in order to optimize and manage a communication network 11. The base station 10 may be configured to perform various SON functions for self-configuration, self-optimization, and self-healing.

In an embodiment, the electronic device 12 may be a system for managing and monitoring the base station 10. The electronic device 12 may perform management, monitoring, etc. of the communication network 11 on a management plane. For example, the electronic device 12 may include an element management system (EMS) server.

The base station 10 may perform SON by using an AI-based SON model or may perform the SON by using a non-AI-based SON model.

The AI-based SON model may be modeled to perform SON by automatically adjusting and optimizing configuration parameters of the communication network 11 according to the state of the communication network 11. Here, the state of the communication network 11 may be determined from PM data, CM data, and KPI of the communication network 11. The AI-based SON model may be modeled based on machine learning or deep learning.

On the other hand, the non-AI-based SON model may be modeled to perform SON without using AI such as machine learning or deep learning. The Non-AI-based SON model may be modeled to reliably manage a communication network even in a situation in which an outlier occurs. For example, the non-AI-based SON model may be modeled to perform the SON in a conventional method, a rule-based method, or a user manual intervention.

When the base station 10 performs the SON using the AI-based SON model, whether the PM data, the CM data, and the KPI of the communication network 11 represent outliers may affect the performance and reliability of the SON. For example, when the PM data, the CM data, and the KPI of the communication network 11 do not fall within a range of training data of the AI-based SON model, the performance and reliability of the SON may be degraded. Accordingly, when the PM data, the CM data, and the KPI of the communication network 11 indicate outliers, it may be preferable for the base station 10 to perform the SON by using the non-AI-based SON model.

Hereinafter, embodiments of a method of determining a policy for performing the SON in consideration of an outlier of the communication network 11 will be described.

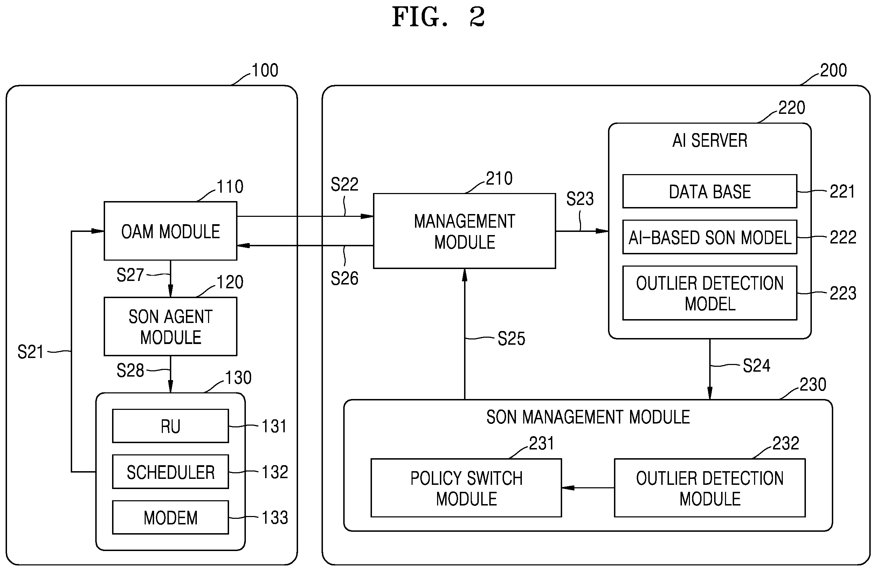

FIG. 2 is a diagram illustrating operations of a base station 100 and an electronic device 200 according to an embodiment.

In an embodiment, the base station 100 may include an Operations Administration Maintenance (OAM) module 110, a SON agent module 120, and a wireless communication network device 130. The electronic device 200 may include a management module 210, an AI server 220, and a SON management module 230.

The modules 110 and 120 illustrated in FIG. 2 may be components implemented by executing a program or instruction stored in a memory actually included in the base station 100 by at least one processor included in the base station 100. In addition, the modules 210, 230, 231, and 232 illustrated in FIG. 2 may be components implemented by executing a program or an instruction stored in a memory actually included in the electronic device 200 by at least one processor included in the electronic device 200. Accordingly, operations described below as being performed by the modules 110 and 120 of the base station 100 may be actually performed by the at least one processor included in the base station 100. In addition, operations described below as being performed by the modules 210, 230, 231, and 232 of the electronic device 200 may be actually performed by the at least one processor included in the electronic device 200.

In operation S21, the OAM module 110 may receive PM data, CM data, and KPI of the communication network of the base station 100 from the wireless communication network device 130.

In an embodiment, the wireless communication network device 130 may include a Radio Unit (RU) 131, a scheduler 132, and a modem 133. The RU 131 may be a device that processes a wireless signal. The scheduler 132 may be a device for scheduling an uplink and a downlink of a communication network. The modem 133 may be a device that performs modulation and demodulation between a digital signal and an analog signal.

In an embodiment, the wireless communication network device 130 may collect terminal information such as a signal strength, a transmission rate, and a connection state of each terminal. The wireless communication network device 130 may generate the PM data, the CM data, and the KPI of the communication network by statistically and analyzing the collected terminal information.

In operation S22, the OAM module 110 may transmit the PM data, the CM data, and the KPI of the communication network of the base station 100 to the management module 210.

In an embodiment, the OAM module 110 may transmit the PM data, the CM data, and the KPI of the communication network to the management module 210 every predetermined period. Alternatively, the OAM module 110 may transmit the PM data, the CM data, and the KPI of the communication network to the management module 210 in response to a request from the management module 210.

In operation S23, the management module 210 may transfer the PM data, the CM data, and the KPI received from the OAM module 110 to the AI server 220.

In an embodiment of the present disclosure, an AI-based SON model 222 may be an AI-based model for the base station 100 to perform SON. The AI-based SON model 222 may be a model based on machine learning or deep learning. The outlier detection model 223 may be a deep learning-based model for detecting an outlier of a communication network.

In an embodiment, the AI server 220 may collect the PM data, the CM data, and the KPI of the communication network. The AI server 220 may store the collected PM data, CM data, and KPI in a database 221.

In an embodiment, the AI server 220 may train the AI-based SON model 222. The AI server 220 may train the AI-based SON model 222 by using the PM data, the CM data, and the KPI collected in the database 221 as training data.

In an embodiment, the AI server 220 may train the outlier detection model 223. The AI server 220 may train the outlier detection model 223 by using the PM data, the CM data, and the KPI collected in the database 221 as training data.

The AI server 220 may use the same training data for training of the AI-based SON model 222 and the outlier detection model 223. Accordingly, consistent outlier detection and management may be possible between the AI-based SON model 222 and the outlier detection model 223.

When initial generation or update of the AI-based SON model 222 and the outlier detection model 223 is required, the AI server 220 may determine to train the AI-based SON model 222 and the outlier detection model 223. For example, the update of the AI-based SON model 222 and the outlier detection model 223 may include at least one of a regular update, an update according to a request from the base station 100, an update according to a request from an administrator, or an update according to a change in the PM data, the CM data, and the KPI.

The AI server 220 may include resources for training the AI-based SON model 222 and the outlier detection model 223. For example, the AI server 220 may include a Graphics Processing Unit (GPU), a Neural Processing Unit (NPU), a Tensor Processing Unit (TPU), a Visual Processing Unit (VPU), or a hardware accelerator, but is not limited thereto.

In some embodiments, the AI server 220 may receive the PM data, the CM data, and the KPI directly from the OAM module 110.

In some embodiments, the AI server 220 may receive, from a simulator, the PM data, the CM data, and the KPI generated by mimicking the communication network of the base station 100. In this case, the AI server 220 may train the AI-based SON model 222 and the outlier detection model 223 by using the mimicked PM data, CM data, and KPI as training data.

In some embodiments, the AI server 220 may be an external device of the electronic device 200. In this case, the AI server 220 may be connected to the electronic device 200 through a wired network such as Ethernet or Infiniband, a wireless network such as Wireless Fidelity (Wi-Fi), or Universal Serial Bus (USB).

In operation S24, the AI server 220 may transfer the PM data received from the management module 210 and the outlier detection model 223 to the SON management module 230.

In an embodiment, the SON management module 230 may include a policy switch module 231 and an outlier detection module 232.

The outlier detection module 232 may determine whether the PM data is an outlier by using the outlier detection model 223. When the AI server 220 updates the outlier detection model 223, the outlier detection module 232 may determine whether the PM data is an outlier by using the updated outlier detection model 223.

When the outlier detection module 232 determines that the PM data is an outlier, the policy switch module 231 may select a non-AI-based policy as a policy for performing the SON. Alternatively, when the outlier detection module 232 determines that the PM data is an inlier, the policy switch module 231 may select an AI-based policy as a policy for performing the SON.

The SON management module 230 may receive the PM data and determine whether the PM data is an outlier when a policy determination for performing the SON is required. For example, when a regular policy decision, a policy decision according to a request from the base station 100, a policy decision according to a request from an administrator, or a policy decision according to a change in the PM data, the CM data, and the KPI is required, the SON management module 230 may receive the PM data and determine whether the PM data is an outlier.

In some embodiments, the SON management module 230 may receive the PM data directly from the management module 210. Alternatively, the SON management module 230 may directly receive the PM data from the OAM module 110.

In operation S25, the SON management module 230 may transfer the selected policy to the management module 210.

In operation S26, the management module 210 may transmit the selected policy to the OAM module 110.

When the policy switch module 231 selects the non-AI-based policy as the policy for performing the SON, the management module 210 may transmit the non-AI-based policy to the OAM module 110. Alternatively, when the policy switch module 231 selects an AI-based policy as the policy for performing the SON, the management module 210 may transmit the AI-based policy to the OAM module 110.

The management module 210 may transmit the AI-based SON model 222 to the OAM module 110. When the policy switch module 231 selects an AI-based policy as a policy for performing SON, when the AI-based SON model 222 is initially generated, when the AI-based SON model 222 is updated, when the base station 100 requests the AI-based SON model 222, or when there is a request from an administrator, the management module 210 may transmit the AI-based SON model 222 to the OAM module 110.

In some embodiments, the management module 210 may receive the AI-based SON model 222 from the AI server 220 and transmit the same to the OAM module 110. Alternatively, the management module 210 may receive the AI-based SON model 222 from the AI server 220 through the SON management module 230 and transmit the same to the OAM module 110.

In some embodiments, the OAM module 110 may receive the AI-based SON model 222 directly from the AI server 220.

In operation S27, the OAM module 110 may transfer the AI-based SON model 222 and the policy received from the management module 210, to the SON agent module 120.

When receiving the non-AI-based policy, the SON agent module 120 may perform the SON by using the non-AI-based SON model. Alternatively, when an AI-based policy is received, the SON agent module 120 may perform SON by using the AI-based SON model 222.

In operation S28, the SON agent module 120 may transfer configuration parameters determined from the SON to the wireless communication network device 130.

As the wireless communication network device 130 operates according to the configuration parameters, the communication network of the base station 100 may be optimized and managed.

In an embodiment, operations S21 to S28 may be performed for an application for SON. The management module 210 may determine an application for the SON on a management plane. For example, the application may be energy saving (ES), load balancing (LB), or a scheduler, but is not limited thereto.

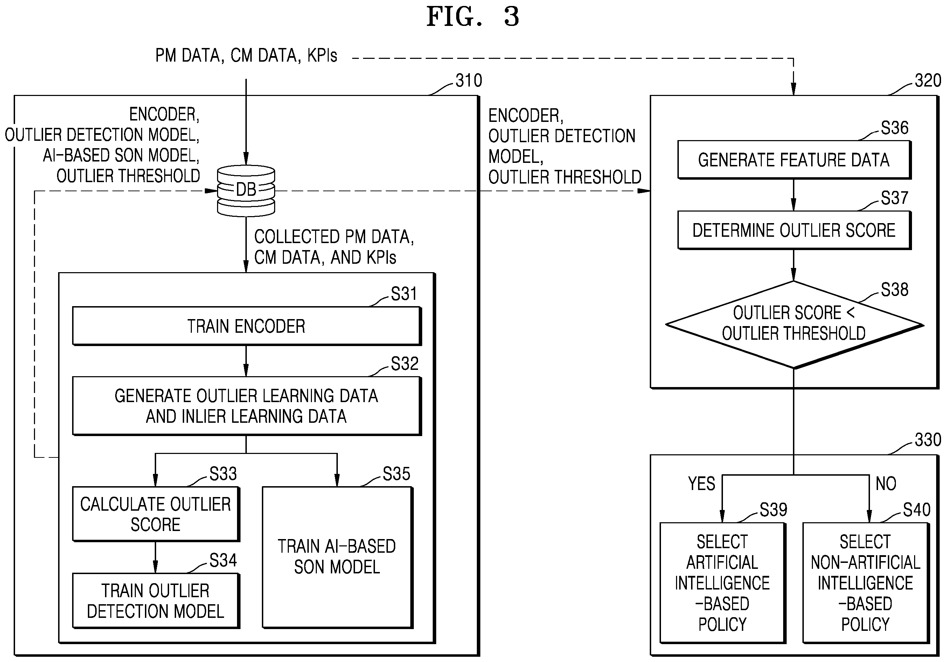

FIG. 3 is a diagram illustrating operations of an AI server 310, an outlier detection module 320, and a policy switch module 330 according to an embodiment.

The AI server 310 may store the PM data, the CM data, and the KPI of the communication network of the base station in a database (DB). The AI server 310 may generate or update the outlier detection model and the AI-based SON model by using the PM data, the CM data, and the KPI of the communication network collected in the database (DB) as training data.

In operation S31, the AI server 310 may train an encoder.

The AI server 310 may generate or update the encoder by training the encoder by using the PM data, the CM data, and the KPI of the communication network collected in the database (DB) as training data.

The encoder may be trained to generate feature data indicating the PM data by compressing the PM data. The PM data of the communication network may have a high dimension, and the encoder may facilitate data processing by lowering the dimension of the PM data. The encoder may be trained such that, the higher the similarity of the CM data and the similarity of the KPI, feature data of the PM data corresponding to the CM data and the KPI is located closer to each other in a feature space.

The encoder may be a deep learning-based model. For example, the encoder may be a Convolutional Neural Network (CNN)-based encoder, a Recurrent Neural Network (RNN)-based encoder, a Multilayer Perceptron (MLP)-based encoder, or an autoencoder, but is not limited thereto.

In operation S32, the AI server 310 may generate outlier learning data and inlier learning data.

The AI server 310 may generate outlier learning data and inlier learning data based on the distribution of the feature data in the feature space.

In an embodiment, the AI server 310 may cluster the feature data and generate outlier learning data and inlier learning data based on clusters of the feature data.

In operation S33, the AI server 310 may calculate an outlier score of each of the outlier learning data and the inlier learning data.

The AI server 310 may calculate an outlier score of each of outlier learning data and inlier learning data by using two or more outlier detection techniques.

In operation S34, the AI server 310 may train the outlier detection model.

The AI server 310 may generate or update the outlier detection model by training the outlier detection model by using the outlier training data and the inlier training data.

The AI server 310 may train the outlier detection model to infer respective outlier scores of the outlier learning data and the inlier learning data calculated in operation S33 and output a final outlier score indicating whether each of the outlier learning data and the inlier learning data is an outlier, from the inferred outlier scores.

The AI server 310 may generate an outlier threshold, which is a comparison reference with a final outlier score, to determine an outlier. The AI server 310 may generate the outlier threshold such that the final outlier score output by the outlier detection model from the outlier training data is greater than or equal to the outlier threshold and the final outlier score output by the outlier detection model from the inlier training data is less than the outlier threshold.

In operation S35, the AI server 310 may train the AI-based SON model.

The AI server 310 may generate or update the AI-based SON model by training the AI-based SON model by using the inlier training data.

In the training of the AI-based SON model, the same inlier training data as in the outlier detection model may be used as training data. Accordingly, consistent outlier detection and management between the AI-based SON model and the outlier detection model can be performed.

The AI server 310 may store the encoder, the outlier detection model, the AI-based SON model, and the outlier threshold in the database (DB). In addition, the AI server 310 may transfer the encoder, the outlier detection model, and the outlier threshold to the outlier detection module 320. In addition, the AI server 310 may transfer the AI-based SON model to the base station.

The outlier detection module 320 may receive the PM data of the communication network of the base station. The outlier detection module 320 may determine whether the received PM data of the communication network is an outlier.

In operation S36, the outlier detection module 320 may generate feature data.

The outlier detection module 320 may generate feature data indicating the PM data, by using the encoder received from the AI server 310.

In operation S31, the higher the similarity of the CM data and the similarity of the KPI, the encoder may be trained such that the feature data of the PM data corresponding to the CM data and the KPI is located closer to each other in the feature space. Accordingly, in operation S36 according to an embodiment, the higher the similarity of the CM data corresponding to the PM data, the feature data may be generated such that the feature data of the PM data is located closer to each other in the feature space. In operation S36 according to an embodiment, the higher the similarity of the KPI corresponding to the PM data, the feature data may be generated such that the feature data of the PM data is located closer to each other in the feature space. In operation S36 according to an embodiment, the higher the similarities of the CM data and the KPI corresponding to the PM data, the feature data may be generated such that the feature data of the PM data is located closer to each other in the feature space.

In operation S37, the outlier detection module 320 may determine an outlier score.

The outlier detection module 320 may determine an outlier score of the feature data by using the outlier detection model received from the AI server 310.

In operation S34, the outlier detection model may be modeled such that a position of the feature data in the feature space affects the outlier score. The similarities of the CM data and the KPI corresponding to the PM data are reflected in the position of the feature data. Accordingly, in operation S37, the outlier detection module 320 may determine the outlier score of the feature data by reflecting the relationship between the PM data, the CM data, and the KPI through the outlier detection model.

In operation S38, the outlier detection module 320 may determine whether the feature data is an outlier.

When the outlier score determined in operation S37 is less than the outlier threshold, the outlier detection module 320 may determine that the feature data is an inlier. Alternatively, when the outlier score determined in operation S37 is greater than or equal to the outlier threshold, the outlier detection module 320 may determine that the feature data is an outlier.

When the outlier detection module 320 determines that the feature data is an inlier in operation S38, the policy switch module 330 may select an AI-based policy as a policy for performing SON in operation S39. Alternatively, when the outlier detection module 320 determines that the feature data is an outlier in operation S38, the policy switch module 330 may select a non-AI-based policy as a policy for performing the SON in operation S40.

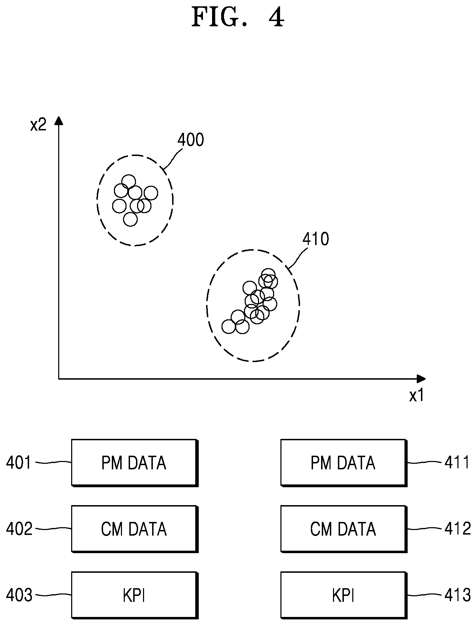

FIG. 4 is a diagram illustrating feature data 400, 410 of a feature space according to an embodiment.

In optimization of a communication network of a base station, PM data, CM data, and KPI are parameters associated with each other. The CM data may be adjusted according to the PM data and the KPI, and the PM data and the KPI may be changed according to the adjusted CM data. For example, as the base station data retransmission period is adjusted, the PM data such as a CQI histogram and an SINR histogram may change, and as the PM data changes, the KPI such as the call drop rate, the downlink transmission rate, and the uplink transmission rate may change.

In an embodiment, the higher the similarity of the corresponding CM data and the similarity of the corresponding KPI, the feature data of the PM data may be located closer to each other in the feature space. In addition, whether the PM data is an outlier may be determined according to the position of the feature data in the feature space. Accordingly, whether the PM data is an outlier may be determined by reflecting a relationship between the corresponding CM data and the KPI.

FIG. 4 according to an embodiment illustrates an example of the feature data 400, 410 of an arbitrary two-dimensional feature space. The first feature data 400 represents first PM data 401, and the second feature data 410 represents second PM data 411.

In an embodiment, the first PM data 401 and a first KPI 403 may indicate performance of a communication network configured with first CM data 402. Accordingly, the first PM data 401 may correspond to the first CM data 402 and the first KPI 403.

In an embodiment, the second PM data 411 and a second KPI 413 may indicate the performance of a communication network configured with second CM data 412. Accordingly, the second PM data 411 may correspond to the second CM data 412 and the second KPI 413.

In an embodiment, the similarity inside the first CM data 402 may be higher than the similarity between the first CM data 402 and the second CM data 412. In an embodiment, the similarity inside the second CM data 412 may be higher than the similarity between the first CM data 402 and the second CM data 412. For example, the first CM data 402 may be the same type of CM data, the second CM data 412 may be the same type of CM data, and the first CM data 402 and the second CM data 412 may be different types of CM data. For example, while the first CM data 402 may have similar values and the second CM data 412 may have similar values, there may be a relatively large difference between the values of the first CM data 402 and the second CM data 412.

In an embodiment, the similarity inside the first KPI 403 may be higher than the similarity between the first KPI 403 and the second KPI 413. In an embodiment, the similarity inside the second KPI 413 may be higher than the similarity between the first KPI 403 and the second KPI 413. For example, the first KPI 403 may be the same type of KPI, the second KPI 413 may be the same type of KPI, and the first KPI 403 and the second KPI 413 may be different types of KPI. For example, while the first KPI 403 has similar values and the second KPI 413 has similar values, there may be a relatively large difference between the values of the first KPI 403 and the second KPI 413.

In an embodiment, as the similarity inside the first CM data 402 and the similarity inside the second CM data 412 are higher than the similarity between the first CM data 402 and the second CM data 412, the first feature data 400 may be densely located in the feature space, the second feature data 410 may be densely located in the feature space, and the first feature data 400 and the second feature data 410 may be located apart from each other in the feature space.

In an embodiment, as the similarity inside the first KPI 403 and the similarity inside the second KPI 413 are higher than the similarity between the first KPI 403 and the second KPI 413, the first feature data 400 may be densely located in the feature space, the second feature data 410 may be densely located in the feature space, and the first feature data 400 and the second feature data 410 may be located apart from each other in the feature space.

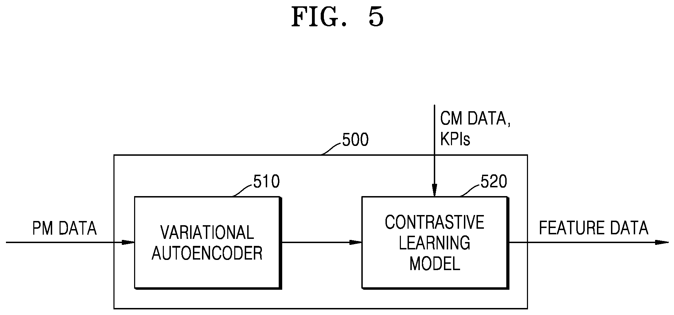

FIG. 5 is a diagram illustrating an encoder 500 according to an embodiment.

In an embodiment, the encoder 500 may include a Variational Autoencoder (VAE) 510 and a Contrastive Learning Model 520.

The VAE 510 may be configured to compress the PM data. The contrastive learning model 520 may be a contrastive learning-based model that uses CM data and a KPI corresponding to PM data as labels. The contrastive learning model 520 may generate feature data such that the feature data is located closer to each other in a feature space as the similarity of the label increases.

In some embodiments, the VAE 510 may be replaced with another module capable of compressing the PM data. For example, the VAE 510 may be replaced with a CNN-based encoder, an RNN-based encoder, an MLP-based encoder, an autoencoder, a Principal Component Analysis (PCA)-based encoder, or a Linear Discriminant Analysis (LDA)-based encoder, but is not limited by the listed examples.

In some embodiments, the VAE 510 may be omitted. That is, the encoder 500 may include only the contrastive learning model 520.

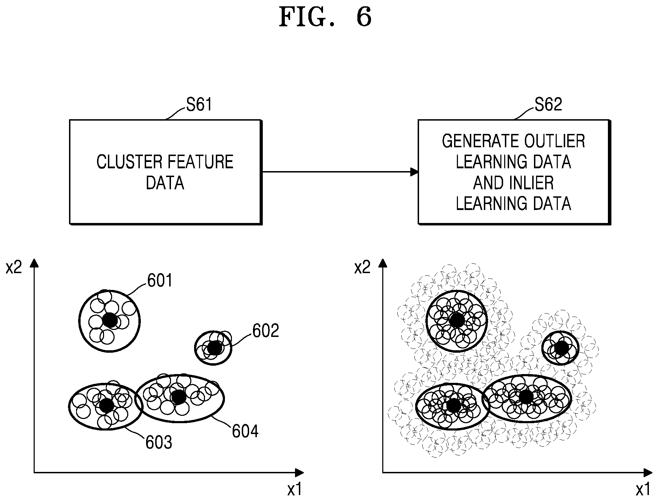

FIG. 6 is a diagram illustrating an operation of generating outlier learning data and inlier learning data, according to an embodiment.

An AI server may generate outlier learning data and inlier learning data from PM data, CM data, and KPI collected in a database. More specifically, the AI server may train the encoder by using the collected PM data, CM data, and KPI, generate feature data of the collected PM data by using an encoder, and generate outlier training data and inlier training data from the feature data.

In operation S61, the AI server may cluster the feature data.

The AI server may cluster the feature data based on a distribution of the feature data in the feature space. For example, the AI server may group the feature data into clusters 601, 602, 603, and 604 based on the distribution of the feature data in the feature space. Various clustering techniques may be used for clustering. For example, K-Means clustering, Mean-Shift clustering, hierarchical clustering, or Gaussian Mixture Model (GMM) clustering may be used, but is not limited thereto.

In operation S62, the AI server may generate outlier learning data and inlier learning data.

The AI server may generate outlier learning data and inlier learning data based on the distribution of the feature data in the feature space. For example, the AI server may generate inlier learning data in the feature space within a predetermined distance based on a center point of each of the clusters 601, 602, 603, and 604, and may generate outlier learning data in the feature space outside the predetermined distance. For example, the AI server may generate inlier learning data in the feature space within a 3-sigma range of each of the clusters 601, 602, 603, and 604, and may generate outlier learning data in the feature space outside the 3-sigma range.

In the graph on the right side of FIG. 6, an exemplary embodiment of the outlier learning data and the inlier learning data generated by the AI server is shown. In the graph on the right side of FIG. 6, circles indicated by dotted lines represent outlier learning data, and circles indicated by solid lines represent inlier learning data.

The AI server may label the generated inlier learning data as an inlier, and may label the generated outlier learning data as an outlier.

In some embodiments, the AI server may generate outlier training data and inlier training data by using a generative model. The AI server may learn the distribution of the feature data in the feature space based on the generative model, and may accordingly generate outlier learning data and inlier learning data.

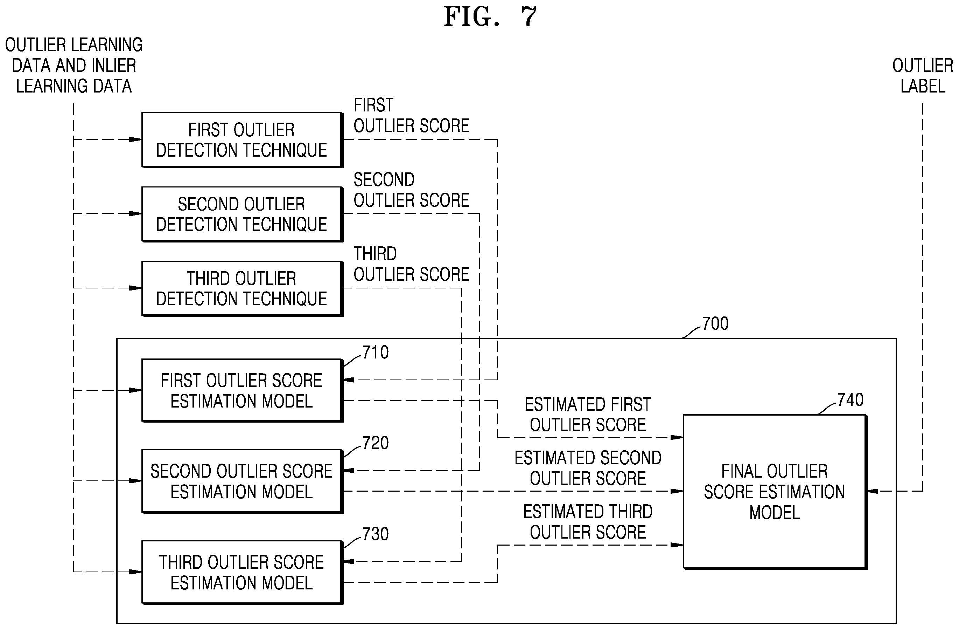

FIG. 7 is a diagram illustrating training of an outlier detection model 700 according to an embodiment.

In an embodiment, the outlier detection model 700 may include two or more outlier score estimation models 710, 720, and 730 and a final outlier score estimation model 740. In an embodiment, FIG. 7 illustrates the outlier detection model 700 including three outlier score estimation models 710, 720, and 730.

In an embodiment, the outlier training data may be labeled as an outlier, and the inlier training data may be labeled as an inlier. Accordingly, the AI server may determine whether training data is outlier training data or inlier training data from the label.

The AI server may train the outlier detection model 700 to generate a final outlier score from each of the outlier training data and the inlier training data.

The AI server may calculate outlier scores by using different outlier detection techniques for each of the outlier learning data and the inlier learning data. In an embodiment, the AI server may calculate first outlier scores by using a first outlier detection technique, calculate second outlier scores by using a second outlier detection technique, and calculate third outlier scores by using a third outlier detection technique, for each of the outlier learning data and the inlier learning data.

The AI server may train the outlier score estimation models 710, 720, and 730 to infer the calculated outlier scores. In an embodiment, the AI server may train each of the outlier score estimation models 710, 720, and 730 such that the first outlier score estimation model 710 infers the first outlier scores from the outlier learning data and the inlier learning data, the second outlier score estimation model 720 infers the second outlier scores from the outlier learning data and the inlier learning data, and the third outlier score estimation model 730 infers the third outlier scores from the outlier learning data and the inlier learning data.

The AI server may determine an outlier threshold. The outlier threshold may be a value that is a comparison reference with a final outlier score for outlier determination. For example, when the final outlier score estimation model 740 is trained to output a probability in a range of 0 to 1 as the final outlier score, the AI server may determine the outlier threshold as 0.5.

The AI server may train the final score estimation model 740 to output the final outlier score. The AI server may train the final outlier score estimation model 740 to generate a final outlier score from the outlier scores inferred by the outlier score estimation models 710, 720, and 730.

The AI server may train the final score estimation model 740 to output a final outlier score smaller than the outlier threshold for the outlier training data and output a final outlier score greater than or equal to the outlier threshold for the inlier training data.

In an embodiment, the models 700, 710, 720, 730, and 740 of FIG. 7 may be models based on deep learning. For example, the models 700, 710, 720, 730, and 740 may be a CNN-based model, an RNN-based model, a Dense Neural Network (DNN)-based model, or a Long Short-Term Memory (LSTM)-based model, but are not limited by the listed examples.

As the outlier detection model 700 is configured to determine the final outlier score by reflecting outlier scores calculated by two or more outlier detection techniques, various types of outliers may be detected, and robustness against outlier detection may be improved.

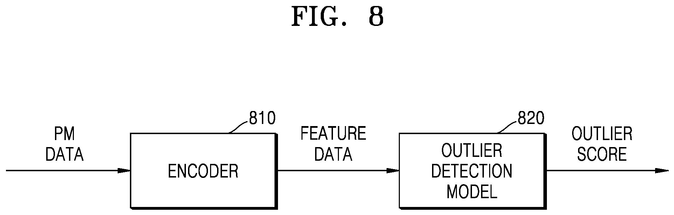

FIG. 8 is a diagram illustrating an operation of determining an outlier score, according to an embodiment.

The outlier detection module may receive PM data of a communication network of a base station and determine an outlier score for the received PM data. To determine an outlier score, the outlier detection module may receive an encoder 810, an outlier detection model 820, and an outlier threshold from the AI server.

The outlier detection module may generate feature data from the PM data by using the encoder 810. The higher the similarity of the CM data corresponding to the PM data or the higher the similarity of the KPI corresponding to the PM data, the feature data may be located closer to each other in the feature space.

The outlier detection module may generate an outlier score from the feature data by using the outlier detection model 820. When an outlier score lower than the outlier threshold is generated, the PM data may be determined as an inlier. When an outlier score greater than or equal to the outlier threshold is generated, the PM data may be determined as an outlier.

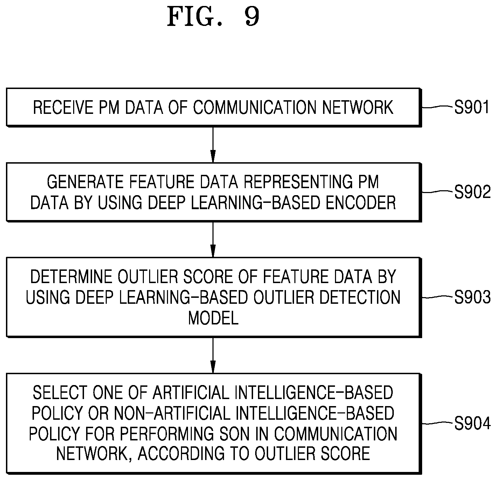

FIG. 9 is a flowchart of a method of determining a policy for a SON, according to an embodiment.

In operation S901, an electronic device may receive PM data of a communication network.

The electronic device may receive the PM data of the communication network from a base station. In an embodiment, the PM data may include data indicating the performance of a communication network of the base station.

In operation S902, the electronic device may generate feature data indicating the PM data by using a deep learning-based encoder.

In an embodiment, the electronic device may generate the feature data such that the feature data of the PM data is located closer to each other in a feature space as the similarity of CM data corresponding to the PM data increases. That is, the closer a distance between the feature data in the feature space, the similarity of the CM data corresponding to the PM data may be higher.

In an embodiment, the electronic device may generate the feature data such that the feature data of the PM data is located closer to each other in the feature space as the similarity of the KPI corresponding to the PM data increases. That is, the closer the distance between the feature data in the feature space, the similarity of the KPI corresponding to the PM data may be higher.

In an embodiment, the electronic device may generate the feature data such that the feature data of the PM data is located closer to each other in the feature space as the similarities of the CM data and the KPI corresponding to the PM data are higher. That is, the closer the distance between the feature data in the feature space, the similarities of the CM data and the KPI corresponding to the PM data may be higher.

In operation S903, the electronic device may determine an outlier score of the feature data by using a deep learning-based outlier detection model.

In an embodiment, the outlier detection model may be modeled such that a position of the feature data in the feature space affects the outlier score. In an embodiment, the similarities of the CM data and the KPI corresponding to the PM data may be reflected in the position of the feature data. Accordingly, the electronic device may determine the outlier score of the feature data by reflecting the relationship between the PM data, the CM data, and the KPI through the outlier detection model.

In operation S904, the electronic device may select one of an AI-based policy or a non-AI-based policy for performing a SON in a communication network according to the outlier score.

In an embodiment, when the outlier score is less than a predetermined outlier threshold, the electronic device may select an AI-based policy as a policy for performing the SON in the communication network. In another embodiment, when the outlier score is greater than or equal to the predetermined outlier threshold, the electronic device may select the non-AI-based policy as the policy for performing the SON in the communication network.

In an embodiment, when the outlier score is less than the predetermined outlier threshold, this may indicate that the PM data is an inlier. In this case, the base station may optimize the communication network by performing a SON by using the AI-based SON model.

In an embodiment, when the outlier score is greater than or equal to the predetermined outlier threshold, this may indicate that the PM data is an outlier. In this case, the base station may reliably manage the communication network even in an outlier occurred situation by performing a SON by using the non-AI-based SON model.

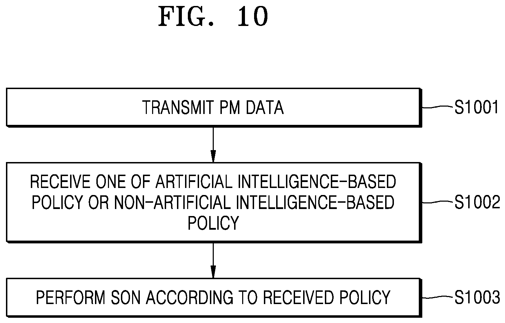

FIG. 10 is a flowchart of a method of performing a SON, according to an embodiment.

In operation S1001, the base station may transmit the PM data to the electronic device.

The PM data may be determined by the performance of the communication network of the base station configured with the CM data. The base station may receive the PM data from a wireless communication network device and transmit the PM data to the electronic device.

In an embodiment, the base station may transmit the PM data of the communication network to the electronic device regularly, at the request of the electronic device, at the request of an administrator, or when a significant change in the PM data, the CM data, and the KPI of the communication network is detected.

In operation S1002, the BS may receive one of the AI-based policy or the non-AI-based policy from the electronic device.

The electronic device may determine one of the AI-based policy or the non-AI-based policy based on the PM data transmitted by the base station. The base station may receive the determined policy from the electronic device.

In operation S1003, the base station may perform a SON according to the received policy.

When the AI-based policy is received, the base station may perform a SON by using the AI-based SON model. Alternatively, when the non-AI-based policy is received, the base station may perform a SON by using the non-AI-based SON model.

Receiving the AI-based policy may indicate that the PM data transmitted by the base station to the electronic device is an inlier. In this case, the base station may optimize the communication network by performing a SON by using the AI-based SON model. On the other hand, receiving the non-AI-based policy may indicate that the PM data transmitted by the base station to the electronic device is an outlier. In this case, the base station may reliably manage the communication network even in an outlier occurred situation by performing the SON by using the non-AI-based SON model.

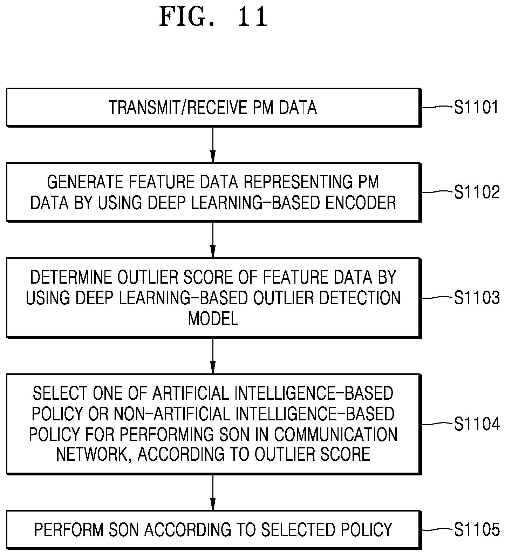

FIG. 11 is a flowchart of a method of performing a SON, according to an embodiment.

In operation S1101, the base station may transmit PM data to the electronic device.

The description of operation S901 of FIG. 9 and operation S1001 of FIG. 10 may be applied to operation S1101.

In operation S1102, the electronic device may generate feature data indicating PM data by using a deep learning-based encoder.

In an embodiment, the encoder may be an encoder generated or updated by the electronic device. In another embodiment, the encoder may be an encoder generated or updated by an AI server outside the electronic device.

The description of operation S902 of FIG. 9 may be applied to operation S1102.

In operation S1103, the electronic device may determine an outlier score of the feature data by using a deep learning-based outlier detection model.

In an embodiment, the outlier detection model may be a model generated or updated by the electronic device. In another embodiment, the outlier detection model may be a model generated or updated by an AI server outside the electronic device.

The description of operation S903 of FIG. 9 may be applied to operation S1103.

In operation S1104, the electronic device may select one of an AI-based policy or a non-AI-based policy for performing a SON in a communication network according to the outlier score.

In an embodiment, when the outlier score is less than a predetermined outlier threshold, the electronic device may select an AI-based policy as a policy for performing a SON in the communication network. In another embodiment, when the outlier score is greater than or equal to the predetermined outlier threshold, the electronic device may select the non-AI-based policy as the policy for performing the SON in the communication network.

The description of operation S904 of FIG. 9 may be applied to operation S1104.

In operation S1105, the base station may perform the SON according to the selected policy.

In an embodiment, the base station may receive the selected policy from the electronic device. When the AI-based policy is received, the base station may perform the SON by using the AI-based SON model. Alternatively, when the non-AI-based policy is received, the base station may perform the SON by using the non-AI-based SON model.

In an embodiment, the AI-based SON model may be a model generated or updated by the electronic device. In another embodiment, the AI-based SON model may be a model generated or updated by an AI server outside the electronic device.

The description of operation S1003 of FIG. 10 may be applied to operation S1105.

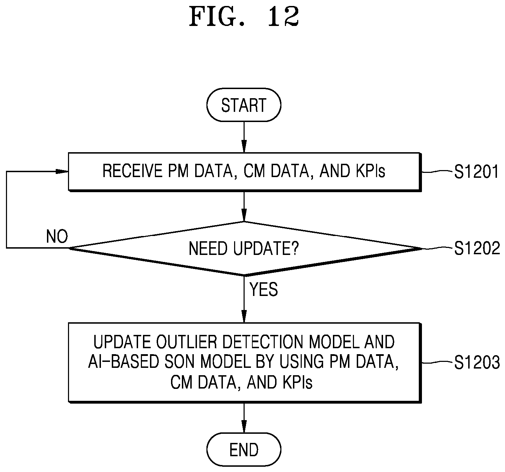

FIG. 12 is a flowchart of a method of updating an outlier detection model and an AI-based SON model, according to an embodiment.

In operation S1201, the AI server may receive the PM data, the CM data, and the KPI of the communication network from the base station.

The AI server may repeatedly receive the PM data, the CM data, and the KPI of the communication network from the base station, and store the received PM data, CM data, and KPI in the database.

In operation S1202, the AI server may determine whether the outlier detection model and the AI-based SON model need to be updated.

When any one of a regular update, an update according to a request from the base station 100, an update according to a request from an administrator, or an update according to a change in the PM data, the CM data, and the KPI is required, the AI server may determine to perform an update of the outlier detection model and the AI-based SON model.

When it is not determined to perform the update, the AI server may proceed with operation S1201. In this case, the AI server may collect the PM data, the CM data, and the KPI of the communication network until the update is performed.

When it is determined to perform the update, the AI server may proceed to operation S1203.

In operation S1203, the AI server may update the outlier detection model and the AI-based SON model by using the PM data, the CM data, and the KPI.

The AI server may update the outlier detection model and the AI-based SON model by using the PM data, the CM data, and the KPI collected in the database as training data.

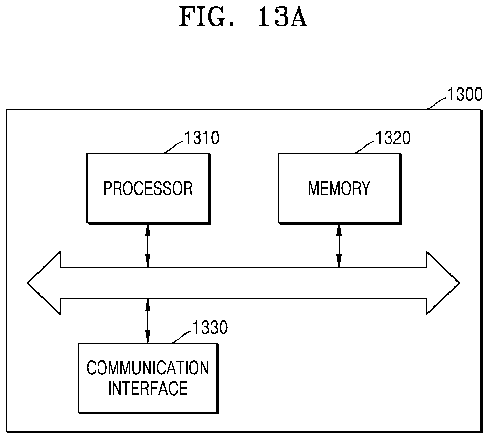

FIG. 13A is a block diagram of an electronic device 1300 according to an embodiment.

The electronic device 1300 may include a processor 1310, memory 1320, and a communication interface 1330, and the processor 1310, the memory 1320, and the communication interface 1330 may communicate with each other through a bus.

The processor 1310 may control overall operations of the electronic device 1300. For example, the processor 1310 may execute one or more instructions of a program stored in the memory 1320 to control overall operations for the electronic device 1300 to determine a policy for a SON. There may be one or more processors 1310.

The processor 1310 may be configured as, for example, at least one of a CPU, a microprocessor, a GPU, application specific integrated circuits (ASICs), digital signal processors (DSPs), digital signal processing devices (DSPDs), programmable logic devices (PLDs), field programmable gate arrays (FPGAs), an application processor, an NPU, or an artificial intelligence dedicated processor designed in a hardware structure specialized for processing an artificial intelligence model, but is not limited thereto.

The memory 1320 may store instructions, a data structure, and a program code that may be read by the processor 1310. The operations performed by the processor 1310 may be implemented by executing instructions or codes of a program stored in the memory 1320.

The memory 1320 may include a flash memory type memory, a hard disk type memory, a multimedia card micro type memory, a card type memory (e.g., an SD memory, an XD memory, etc.), a Read-Only Memory (ROM), an Electrically Erasable Programmable Read-Only Memory (EEPROM), a Programmable Read-Only Memory (PROM), a non-volatile memory including at least one of a magnetic memory, a magnetic disk, and an optical disk, and a volatile memory such as a Random Access Memory (RAM) or a Static Random Access Memory (SRAM).

The memory 1320 may store one or more instructions and/or programs that cause the electronic device 1300 to operate to determine a policy for a SON.

The communication interface 1330 may perform data communication with other electronic devices under the control of the processor 1310.

The communication interface 1330 may include a communication circuit capable of performing data communication between the electronic device 1300 and another electronic device by using at least one of data communication methods including, for example, wired LAN, wireless LAN, Wi-Fi, Bluetooth, ZigBee, Wi-Fi Direct (WFD), IrDA (infrared Data Association), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), or RF communication.

The communication interface 1330 may perform data communication with a base station. For example, the communication interface 1330 may receive the PM data, the CM data, and the KPI from the base station, and may transmit the determined policy and an AI-based SON model to the base station.

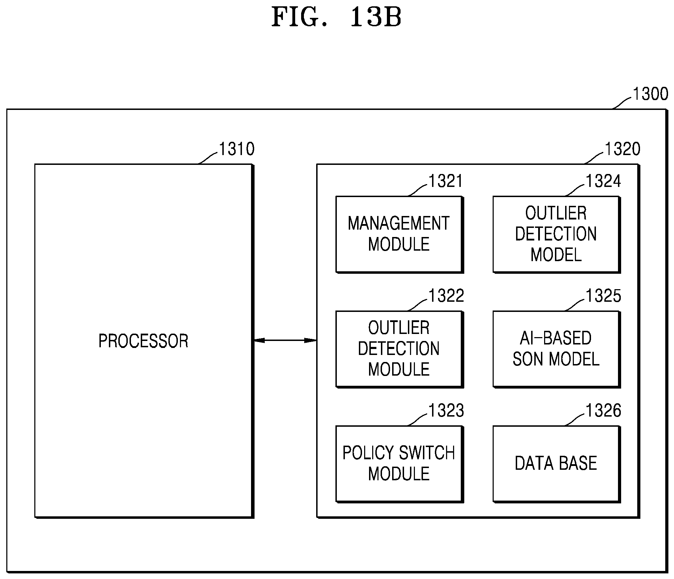

FIG. 13B is a block diagram of the electronic device 1300 according to an embodiment.

In describing FIG. 13B, descriptions overlapping those described with reference to FIG. 13A will be omitted for brevity.

In an embodiment, an instruction and/or a program for implementing functions of a management module 1321, an outlier detection module 1322, and a policy switch module 1323 may be stored in the memory 1320. Also, an outlier detection model 1324, an AI-based SON model 1325, and a database 1326 may be further stored in the memory 1320.

The management module 1321, the outlier detection module 1322, and the policy switch module 1323 may be executed by the processor 1310. As the description related to the operations of each of the above-described modules has already been described in the description of the previous drawings, a repeated description will be omitted.

Meanwhile, the embodiments of the present disclosure may also be implemented in the form of a recording medium including instructions executable by a computer, such as a program module executed by a computer. The computer-readable medium may be any available medium accessible by a computer, and includes both volatile and nonvolatile media, removable and non-removable media. In addition, the computer-readable medium may include a computer storage medium and a communication medium. Computer storage media includes both volatile and nonvolatile, removable and non-removable media implemented in any method or technology for storage of information such as computer-readable instructions, data structures, program modules or other data. Communication media may typically include computer readable instructions, data structures, or other data of a modulated data signal such as a program module.

In addition, the computer-readable storage medium may be provided in the form of a non-transitory storage medium. Here, 'non-transitory storage medium' only means that it is a tangible device and does not include signals (e.g., electromagnetic waves). This term does not distinguish between cases where data is semi-permanently stored in a storage medium and cases where data is temporarily stored. For example, the "non-transitory storage medium" may include a buffer in which data is temporarily stored.

According to an embodiment, a method according to various embodiments disclosed herein may be included and provided in a computer program product. Computer program products are commodities and may be traded between sellers and buyers. A computer program product may be distributed in the form of a machine-readable storage medium (e.g., compact disc read only memory (CD-ROM)) or distributed online (e.g., downloaded or uploaded) through an application store or directly between two user devices (e.g., smartphones). In the case of online distribution, at least a portion of a computer program product (e.g., a downloadable app) may be at least temporarily stored in a machine-readable storage medium such as a memory of a manufacturer's server, a server of an application store, or a relay server, or may be temporarily generated.

The description of the present disclosure is for illustrative purposes only, and a person having ordinary skill in the art to which the present disclosure pertains will understand that the present disclosure may be easily modified into other specific forms without changing the technical idea or essential characteristics of the present disclosure. Therefore, it should be understood that the embodiments described above are examples in all respects and not limiting. For example, each component described as a single entity may be implemented in a distributed manner, and likewise, components described as distributed may be implemented in a combined manner.

The scope of the present disclosure is indicated by the claims described below rather than the detailed description above, and all changes or modifications derived from the meaning and scope of the claims and their equivalent concepts should be interpreted as being included in the scope of the present disclosure.

## Claims

1. A method for determining a policy for a SON, the method comprising:
receiving PM data of a communication network (S901);
generating feature data indicating the PM data by using a deep learning-based encoder (S902);
determining an outlier score of the feature data by using a deep learning-based outlier detection model (S903); and
selecting one of an artificial intelligence-based policy or a non-artificial intelligence-based policy for performing the SON in the communication network according to the outlier score (S904).

2. The method of claim 1, wherein
the selecting of one of the artificial intelligence-based policy or the non-artificial intelligence-based policy comprises:
selecting the artificial intelligence-based policy in case that the outlier score is less than a predetermined outlier threshold; and
selecting the non-artificial intelligence-based policy in case that the outlier score is greater than or equal to the predetermined outlier threshold.

3. The method of claim 1 or 2, wherein
the generating of the feature data indicating the PM data comprises,
generating, by using the deep learning-based encoder, the feature data such that the feature data of the PM data is located closer to each other in a feature space as a similarity of CM data of the communication network corresponding to the PM data increases.

4. The method of any one of claims 1 to 3, wherein
the generating of the feature data indicating the PM data comprises,
generating, by using the deep learning-based encoder, the feature data such that the feature data of the PM data is located closer to each other in the feature space as a similarity of a KPI of the communication network corresponding to the PM data increases.

5. The method of any one of claims 1 to 4, wherein
the outlier detection model is trained to infer outlier scores of input data calculated using two or more outlier detection techniques and, from the inferred outlier scores, output a final outlier score indicating whether the input data is an outlier.

6. The method of any one of claims 1 to 5, wherein
the generating of the feature data indicating the PM data comprises,
generating the feature data indicating the PM data by using the encoder updated based on PM data, CM data, and KPI collected from the communication network.

7. The method of claim 6, wherein
the updated encoder is
trained such that feature data of the collected PM data corresponding to the collected CM data and the collected KPIs is located closer to each other in a feature space as a similarity of the collected CM data and a similarity of the collected KPI increase.

8. The method of any one of claims 1 to 7, wherein
the determining of the outlier score of the feature data comprises,
determining the outlier score of the feature data by using an outlier detection model updated based on the PM data collected from the communication network.

9. The method of claim 8, wherein
the updated outlier detection model is
trained to infer each of outlier scores of outlier learning data and inlier learning data calculated using two or more outlier detection techniques and, from the inferred outlier scores, output a final outlier score indicating whether each of the outlier learning data and the inlier learning data is an outlier, and
the outlier learning data and the inlier learning data are generated based on a distribution of the feature data indicating the collected PM data in the feature space.

10. The method of any one of claims 1 to 9, wherein
the artificial intelligence-based policy comprises a policy of performing the SON on the communication network by using an artificial intelligence-based SON model, and
the artificial intelligence-based SON model is trained based on same training data as a deep learning model for determining the outlier score.

11. An electronic device (1300) for determining a policy for a SON, the electronic device comprising:
memory (1320) storing one or more instructions; and
one or more processors (1310) executing the one or more instructions stored in the memory,
wherein the one or more processors (1310) are configured to, by executing the one or more instructions,
receive PM data of a communication network,
generate feature data indicating the PM data by using a deep learning-based encoder,
determine an outlier score of the feature data by using a deep learning-based outlier detection model, and
select one of an artificial intelligence-based policy or a non-artificial intelligence-based policy for performing the SON in the communication network according to the outlier score.

12. The electronic device of claim 11, wherein
the one or more processors (1310) are configured to, by executing the one or more instructions,
select the artificial intelligence-based policy in case that the outlier score is less than a predetermined outlier threshold, and
select the non-artificial intelligence-based policy in case that the outlier score is greater than the predetermined outlier threshold.

13. The electronic device of claim 11 or 12, wherein
the one or more processors (1310) are configured to, by executing the one or more instructions,
generate, by using the deep learning-based encoder, the feature data such that the feature data of the PM data is located closer to each other in a feature space as a similarity of CM data of the communication network corresponding to the PM data increases.

14. The electronic device of any one of claims 11 to 13, wherein
the one or more processors (1310) are configured to, by executing the one or more instructions,
generate, by using the deep learning-based encoder, the feature data such that the feature data of the PM data is located closer to each other in a feature space as a similarity of a KPI of the communication network corresponding to the PM data increases.

15. A computer-readable storage medium storing a program for executing the method of any one of claims 1 to 10 on a computer.
